# EUROPÄISCHE PATENTSCHRIFT

(11) **EP 3 451 576 B1**
(45) Veröffentlichungstag und Bekanntmachung des Hinweises auf die Patenterteilung: **10.03.2021**
(21) Anmeldenummer: 17188718.5
(22) Anmeldetag: 31.08.2017
(51) Int. Cl.: H04W 12/10, H04W 12/12, H04L 9/32

(54) **SYSTEM UND VERFAHREN ZUR KRYPTOGRAPHISCH GESCHÜTZTEN ÜBERWACHUNG WENIGSTENS EINER KOMPONENTE EINES GERÄTS ODER EINER ANLAGE**
SYSTEM AND METHOD FOR CRYPTOGRAPHICALLY PROTECTED MONITORING OF AT LEAST ONE COMPONENT OF A DEVICE OR ASSEMBLY
SYSTÈME ET PROCÉDÉ DE SURVEILLANCE CRYPTOGRAPHIQUE PROTÉGÉE D'AU MOINS UN COMPOSANT D'UN APPAREIL OU D'UNE INSTALLATION

(43) Veröffentlichungstag der Anmeldung: 06.03.2019
(73) Patentinhaber: Siemens Aktiengesellschaft, 80333 München (DE)
(72) Erfinder: Falk, Rainer, 85586 Poing (DE)

(56) Entgegenhaltungen:
- US-A1- 2016 275 461
- US-A1- 2017 163 733
- US-A1- 2017 234 709
- ARSHDEEP BAHGA ET AL: "Blockchain Platform for Industrial Internet of Things", JOURNAL OF SOFTWARE ENGINEERING AND APPLICATIONS, Bd. 09, Nr. 10, 28. Oktober 2016 (2016-10-28), Seiten 533-546, XP055403465, ISSN: 1945-3116, DOI: 10.4236/jsea.2016.910036

## Beschreibung

Die Erfindung bezieht sich auf ein System und Verfahren zur kryptographisch geschützten Überwachung wenigstens einer Komponente eines Geräts oder einer Anlage sowie ein dazugehöriges Computerprogramm(-produkt).

### Hintergrund

Hardware- und Softwarekomponenten eines Geräts oder Anlage können Fehlfunktion aufweisen oder absichtlich manipuliert sein. Dabei sollten kritische Funktionen verlässlich implementiert sein.

Die Sicherheit von Internet der Dinge (Internet of Things) und (Feld-)geräten oder auch eingebetteten Systemen bzw. Geräten, die in einer industriellen Anlage eingesetzt werden können, sowie das Verhindern von absichtlichen Angriffen spielt eine zunehmend wichtigere Rolle. Bei einer erfolgreichen Manipulation kann es zu einer Fehlfunktion in Steuerungsfunktionen der oben genannte Geräte(komponenten) kommen. Daher besteht auch ein Bedarf, die Integrität von Steuerungsfunktionen insbesondere für ein autonomes oder assistiertes Fahren und für eine Cloud-basierte Robotersteuerung (Cloud Robotics) im Industrie 4.0 Umfeld zu schützen.

Durch kryptographische Schutzfunktionen können Ziele wie Integrität, Vertraulichkeit oder Authentizität der Datenübertragung von Gegenständen erreicht werden. Dadurch werden absichtliche, zielgerichtete Angriffe auf die Datenübertragung abgewehrt.

Der Begriff "Sicherheit" bezieht sich im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört unter anderem zum Begriff "Sicherheit. Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) und/oder der Authentifikation von Nutzern oder Gegenständen verstanden. Die kryptografische Schutzfunktionalität kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Nachrichtenauthentifizierungscode oder digitale Signatur)
- Prüfen einer kryptografischen Prüfsumme (z.B. Nachrichtenauthentifizierungscode oder digitale Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. Tamper-Schutz, Systemintegrität, Security Incident and Event Management SIEM)
- Überwachen oder Überwachung von Daten
- Validierung von Daten
- Filterung von Daten

Die aufgezählten kryptografischen Funktionalitäten können dabei jeweils wieder mit anderen/weiteren Verfahren oder Kombinationen dieser Verfahren ausgeführt sein.

Zur Überwachung von Fehlfunktionen von System- bzw. Gerätekomponenten können sogenannte Watchdogs https://de.wikipedia.org/wiki/Watchdog eingesetzt werden. Damit können z.B. softwaretechnische Endlosschleifen erkannt werden und ein Gerät ggf. automatisch neu gestartet werden. Watchdogs sind jedoch eher zur Erkennung von zufälligen Fehlern geeignet, nicht jedoch, um eine gezielte Manipulation zu erkennen (Security) Dokument US 2017/163733 A beschreibt eine Audit-Blockchain zum überprüfen von IoT Geräten mit Audit-Daten in der Blockchain.

Es ist daher Ziel, die Integrität von Systemen (z.B. Feldgeräte, Steuergeräte, Industrie-PC, Server, virtuelle Maschine, Software-Container) als ein wesentliches Schutzziel zu verbessern. Es soll eine unzulässige Veränderung (Manipulation) eines solchen ggf. Software-basierten Systems verhindert oder zumindest erkannt werden.

Eine Aufgabe der vorliegenden Erfindung ist es, ein Verfahren und ein System bzw. Vorrichtung bzw. Anordnung bereitzustellen, welche eine solche Verbesserung bieten.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein System (oder Vorrichtung/Anordnung) zur kryptographisch geschützten Überwachung wenigstens einer Komponente eines Geräts oder einer Anlage aufweisend:
- Mittel zum Bereitstellen zumindest eines zweiten Gliedes (BCNF) einer Blockkette, welches mindestens einen Transaktionsdatensatz umfasst, der einen überwachten Betriebszustand mindestens einer Komponente des Geräts oder der Anlage umfasst,
- Mittel zum Verketten des zumindest einen zweiten Glieds mit einem ersten Glied derselben oder einer weiteren Blockkette,
- Mittel zum Bereitstellen einer vorzugsweise kryptographisch ausgebildeten Überprüfungsfunktion, welche eine durch den mindestens einen Transaktionsdatensatz definierte, auszuführende Transaktion auf Integrität bzw. Zulässigkeit bzw. Gültigkeit überprüft, und
- Mittel zum Bilden eines eine zum Betriebszustand zugeordnete Maßnahme aufweisenden Transaktionsdatensatzes abhängig vom von der Überprüfungsfunktion gelieferten Überprüfungsergebnis, wobei die durch den Transaktionsdatensatz definierte Transaktion durch eine Komponente des Geräts oder der Anlage ausführbar ist und die Maßnahme durch dieselbe oder eine andere Komponente oder durch eine sich außerhalb des Geräts oder der Anlage befindlichen Stelle einleitbar und/oder ausführbar ist.

Die sich außerhalb befindliche Stelle kann ein Leitsystem oder ein (Steuerungs-)rechner für die Komponenten bzw. die Anlage sein. Das Bilden des Transaktionsdatensatzes hinsichtlich der Maßnahme kann ein anderer als der vorgenannte Transaktionsdatensatz (betreffend Betriebszustand) sein oder als Teil des vorgenannten Transaktionsdatensatzes in diesen integriert sein. Die Maßnahme kann als Programmkode ausgebildet sein oder einfach ein Signal zu dessen Weitergabe an die genannten Komponenten oder die genannte Stelle sein. Die Maßnahme kann als eine Überwachungs-Bestätigungstransaktion ausgebildet sein (z.B. OK, Fehler, Fehlen der Betriebszustands-Überwachungsinformation, oder Manipulation), die zum Betriebszustand, der mit Hilfe des vorgenannte Transaktionsdatensatzes überwacht wird, passt bzw. diesem zugeordnet ist oder aus diesem resultiert bzw. abgeleitet wird. Insbesondere kann durch eine Überwachungs-Bestätigungstransaktion eine Maßnahme (Schutzmaßnahme) automatisch bei einer erkannten Manipulation eines Gerätes bzw. eine Anlage ausgelöst werden. Durch die Maßnahme kann vermieden werden, dass bei einer Manipulation eine Schädigung des Gerätes bzw. der Anlage oder deren Umgebung erfolgt. Dies erfolgt mit hoher Verlässlichkeit, da die Betriebszustandsüberwachung und das Bilden der Überwachungs-Bestätigungstransaktion durch eine Blockkette kryptographisch geschützt erfolgen.

Die Technologie von Blockketten (engl. Blockchains bzw. Block Chains) bzw. "Distributed Ledgers" ist aktuell ein intensiv diskutierte Technologie.

Unter einer Blockkette bzw. Blockchain wird im allgemeinen eine Datenbank verstanden, deren Integrität (Sicherung gegen nachträgliche Manipulation) durch Speicherung des Einwegfunktionswertes , auch Hashwert genannt, des vorangehenden Datensatzes bzw. Blocks bzw. Glieds im jeweils nachfolgenden, also durch kryptographische Verkettung, gesichert ist. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Einmal in der Kette auftauchende Transaktionen sind nicht mehr unbemerkt veränderbar. Bei diesem Mining-Prozess wird die Gültigkeit von im Block zu hinterlegenden Transaktionen geprüft. Neben einem Mining-Prozess als "Proof of Work" sind auch Alternativen bekannt, insbesondere ein "Proof of Stake", bei dem ein Block durch einen pseudozufällig, aber deterministisch ausgewählten Blockketten-Knoten bestätigt wird, oder eine zugangskontrollierte Blockkette (permissioned Blockchain).

Bekannte Blockchain-Systeme sind Bitcoin und Ethereum. Während Bitcoin ursprünglich für Kryptowährungstransfers geschaffen wurde, baut Ethereum auf das Einbinden von sogenannten Smart Contracts auf. Die in einem Smart Contract vereinbarten Bedingungen werden durch die Blockchain gesichert und der Vertrag selbst wird über das Netz abgewickelt. Das Umsetzen der Vertragsbedingungen wird über dazugehörige durchgeführte Transaktionen kontrolliert: In einem programmierten Smart Contract vorgesehene Folgeaktionen können je nach erfolgter Transaktion durchgeführt werden. Es sind weitere Blockketten-Realisierungen z.B. Hyperledger möglich.

Ein in der Blockchain geschützter Transaktionsdatensatz umfasst im allgemeinen Programmcode. Unter dem Begriff "Smart Contract" wird ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht.

Mit Hilfe des Transaktionsdatensatzes kann die Transaktion ausgeführt werden. Unter einer Transaktion wird eine gegenseitige Übertragung von virtuellen oder realen Gütern bzw. einer Zahlung oder anderen Informationen von einem Sender zu einem Empfänger verstanden. Bei Bitcoin wird eine relativ einfache stackbasierte Laufzeitumgebung verwendet. Eine Transaktion umfasst dabei die Prüfsumme zur Überprüfung der Gültigkeit bzw. Integrität der Transaktion. Die Blockchain-Plattform Ethereum unterstützt eine frei programmierbare Laufzeitumgebung, sodass der Programmcode einer Blockchain flexibel realisiert werden kann. Dabei wird z. B. eine Geschäftslogik als Programmcode im Transaktionsdatensatz und damit in der Blockchain hinterlegt. So gesehen ist die auszuführende Transaktion in einem (Ketten-)Glied der Blockchain hinterlegt. Demnach ist in diesem Zusammenhang eine Unterscheidung zwischen der auszuführenden Transaktion und dem Transaktionsdatensatz, der zur Ausführung der Transaktion ausgestaltet ist, ist kaum möglich. Auch die Blockketten-Plattform Hyperledger unterstützt eine frei programmierbare Laufzeitumgebung zur Ausführung von Smart Contracts.

Die Überprüfungsfunktion kann im ersten Glied in der Blocckette integriert sein, insbesondere in dem ersten Transaktionsdatensatz. Die Überprüfungsfunktion kann jedoch auch außerhalb einer Blockkette in einer Laufzeitumgebung zum Ausführen der Transaktion angeordnet sein. Diese Überprüfungsfunktion führt in der Regel eine Integritätsüberprüfung durch. In der Informationssicherheit bedeutet Integrität von Korrektheit, Vollständigkeit und nicht manipulierte Daten.

Davon abhängig kann ein Betriebszustand einer Geräte- bzw. Anlagenkomponente zulässig bzw. gültig sein. Die Überprüfungsfunktion kann durch einen sogenannten Smart Contract einer Blockkette implementiert sein.

Um eine Art kryptographisch geschützte Überwachungsfunktion z.B. in Form eines Watchdogs zu realisieren, wird der Betriebszustand mindestens einer Komponente (z.B. NW) des Geräts (IoT) oder der Anlage in mindestens einen Transaktionsdatensatz repräsentiert. Die Erfindung stellt somit einen Blockchain-basierte kryptographische Überwachungsfunktions, insbesondere ein Watchdog (für Geräte, Container, virtuelle Maschinen (VM)) bereit.

Blockchains können in der Regel nur Daten innerhalb ihrer eigenen Infrastruktur austauschen. Sogenannte Oracles können eine Verbindung zur "Außenwelt" herstellen. Sogenannte Integrity-Oracles (Integritäts-Orakel) eines Gerätes stellen Integritätsmessdaten des Gerätes in eine Blockchain ein. D.h. es werden Transaktionen gebildet und in einer Blockchain-Transaktionsdatenstruktur aufgenommen, die Integritätsmessdaten umfassen, welche wie folgt folgende Informationen bzw. Daten beinhalten können:
- Geräteintegritäts-Informationen einer VM, eines (Software-)Containers (Docker), eines eingebettenen Gerätes, eines Servers), die geladene Firmware und geladene Programme (z.B. Versionsinformation, Hashwert), Prozesslisten, Prüfsummen von Speicherinhalten, Konfigurationsdaten betreffen können.
- Sensormessdaten, Aktoransteuerungsdaten (d.h. Daten einer Ein-/Ausgabeschnittstelle)
- Daten-Introspektion einer virtuellen Maschine bzw. eines Containers (Speicher-Introspektion, Prozesse innerhalb der virtuellen Maschine/Container, Hash-Werte der Programmcodedaten der ausgeführten Prozesse).

Ein Vorteil der Erfindung ist, dass die Integrität der Ausführung nicht nur gegenüber zufälligen Fehlern, sondern auch gegen gezielte Manipulation durch die Blockchain-basierte Ausführung geschützt ist. Weiterhin kann die Blockketten-Plattform auf unterschiedlichen Hardware-Plattformen ausgeführt werden, sodass ein Ausnutzen eines Hardware-Trojaners einer Hardware-Plattform verhindert oder zumindest erschwert wird. Ebenso kann die Blockketten-Plattform auf unterschiedlichen Software-Plattformen, z.B. unterschiedliche Firmware und unterschiedliche Betriebssysteme, ausgeführt werden, sodass ein Ausnutzen einer undokumentierten Funktion (Backdoor) einer Firmware/Software-Plattform verhindert oder zumindest erschwert wird. Insbesondere kann ein versuchtes Ausnutzen eines Hardware-Trojaners oder einer undokumentierten Funktion verlässlich erkannt werden.

Eine Weiterbildung der Erfindung sieht vor, dass das erste Glied einen weiteren überwachten Betriebszustand mindestens einer weiteren Komponente des Geräts oder der Anlage umfasst.

Eine Weiterbildung der Erfindung sieht vor, dass ein negatives Überprüfungsergebnis einen Wert für einen Fehler und/oder für eine Manipulation oder für ein Nichtvorhandensein bzw. Fehlen eines erwarteten Transaktionsdatensatzes umfasst.

Eine Weiterbildung der Erfindung sieht vor, dass ein positives Überprüfungsergebnis einen Wert für eine Bestätigung (z.B. "Laufzeitintegrität geprüft" oder "safe for use") umfasst.

Eine Weiterbildung der Erfindung sieht vor, dass das Überwachen der mindestens einen und/oder weiteren Komponente mittels eines sogenannten Smart Contract implementiert ist.

Eine Weiterbildung der Erfindung sieht vor, dass der Betriebszustand einen Geräte- oder Anlagen-internen Zustand betrifft.

Eine Weiterbildung der Erfindung sieht vor, dass das der Betriebszustand einen Zustand von außerhalb des Geräts oder der Anlage angeordneten Sensoren, Aktoren und/oder Steuerungseinrichtungen für das Geräte oder die Anlage betrifft.

Ein weiterer Aspekt der Erfindung ist ein Verfahren zur kryptographisch geschützten Überwachung wenigstens einer Komponente eines Geräts oder einer Anlage aufweisend folgende Schritte:
- Bereitstellen zumindest eines zweiten Gliedes einer Blocckette, welches mindestens einen Transaktionsdatensatz umfasst, wobei im Transaktionsdatensatz ein überwachter Betriebszustand mindestens einer Komponente des Geräts oder der Anlage repräsentiert wird,
- Verketten des zumindest einen zweiten Glieds mit einem ersten Glied derselben oder einer weiteren Blockkette,
- Bereitstellen einer vorzugsweise kryptographisch ausgebildeten Überprüfungsfunktion, welche den Transaktionsdatensatz auf Integrität/Zulässigkeit überprüft, und
- Bilden eines eine zum Betriebszustand zugeordnete Maßnahme aufweisenden Transaktionsdatensatzes abhängig vom von der Überprüfungsfunktion gelieferten Überprüfungsergebnis, wobei die durch den Transaktionsdatensatz definierte Transaktion durch eine Komponente des Geräts oder der Anlage ausgeführt wird und die Maßnahme durch dieselbe oder eine andere Komponente oder durch eine sich außerhalb des Geräts oder der Anlage befindlichen Stelle eingeleitet und/oder ausgeführt wird.

Das Verfahren ist wiederholbar. Mehrere Glieder beginnend mit einem Startglied können bereitgestellt bzw. gebildet bzw. erzeugt werden, wobei jedes Glied für sich eine Überprüfungsfunktion der oben genannten Art oder Teilfunktionen davon entsprechend enthalten kann. Das bedeutet, dass die Blockkette eine Folge von Transaktionen aufweist, die jeweils einen Betriebszustand einer (Geräte- oder Anlagen-)Komponente überwachen. Dadurch kann der Betrieb eines Gerätes bzw. einer Anlage laufend überwacht werden.

Das Verfahren kann entsprechend der Weiterbildungen und Ausführungsformen des oben genannten System bzw. Anordnung weitergebildet werden.

Das Verfahren wird vorzugsweise rechnergestützt durchgeführt. Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, der Mittel oder anderer Aspekte und/oder Teilaspekte der Erfindung realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Die oben genannten Mittel können eine Blockchainknoten-Funktionalität bilden. Unter Mittel kann zudem im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Erstellen, Laden oder ein Speichern, des Transaktionsdatensatzes auf oder von einem Datenträger bzw. Plattform verstanden werden.

Des Weiteren wird Computerprogramm(-produkt) mit Programmbefehlen für das System der oben genannten Art, das mittels der Programmbefehle konfiguriert wird, die zur kryptographisch geschützten Überwachung wenigstens einer Komponente eines Geräts oder einer Anlage nach einem der vorhergehenden Verfahrensansprüche geeignet sind und zumindest ein Glied einer Blockkette bilden, dessen Transaktionsdatensatz einen überwachten Betriebszustand mindestens einer Komponente des Geräts oder der Anlage umfasst.

Das Computerprogramm(-produkt) kann eine Laufzeitumgebung der oben genannten Art bilden.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht.

Die Verwendungen, Vorrichtungen und Computerprogramm(produkte) können entsprechend der Weiterbildungen/Ausführungsformen des oben genannten Verfahrens und dessen Weiterbildungen/Ausführungsformen ausgebildet sein.

Darüber hinaus ist eine Bereitstellungsvorrichtung zum Speichern und/oder Bereitstellen des Computerprogrammprodukts möglich. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass diese erfindungsgemäße Vorrichtung und/oder das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ausführungsbeispiel eines Transaktionsdatensatzes eines Gliedes einer Blockkette;
- Fig. 2: ein Ausführungsbeispiel einer Blockkette;
- Fig. 3: Ausführungsbeispiel der Erfindung, wie eine Blockketten-Funktionalität in ein System bzw. Gerät integriert sein kann;
- Fig. 4: schematisch ein Ablaufdiagramm des erfindungsgemäßen Verfahrens.

In den Figuren sind funktionsgleiche Elemente mit denselben Bezugszeichen versehen, sofern nichts anderes angegeben ist.

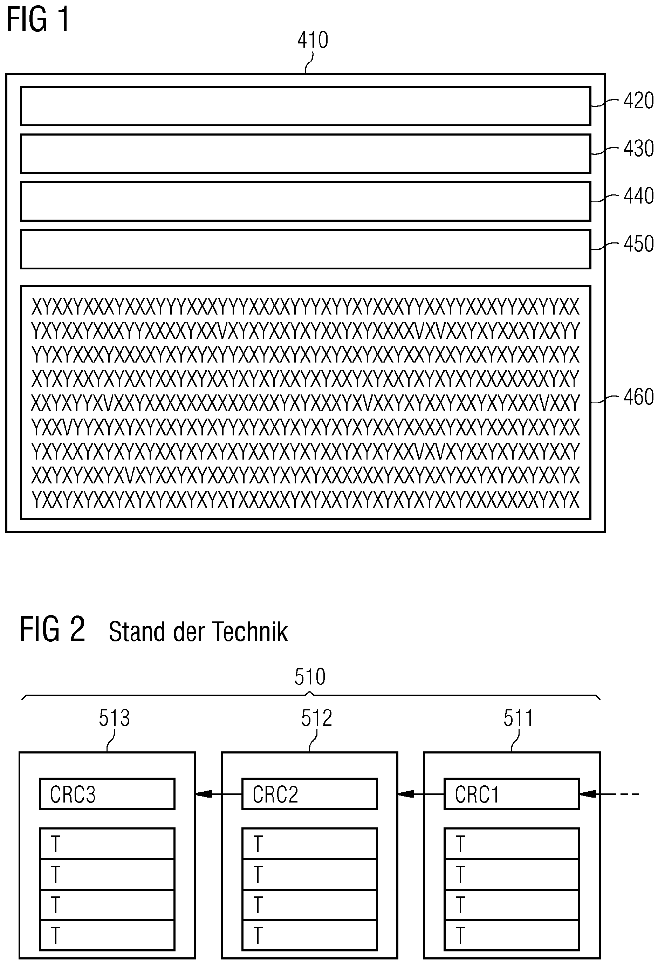

Im Einzelnen zeigt die Fig. 2 die Glieder, beispielsweise ein erstes Glied 511, ein zweites Glied 512 und ein drittes Glied 513, einer Blockkette 510.

Eine solche Blockkette ist beispielsweise aus https://de.bitcoin.it/wiki/Blockkette bekannt.

Die Glieder umfassen jeweils mehrere Transaktionen T. Die Glieder umfassen jeweils zusätzlich noch einen kryptographischen Hashwert CRC1, CRC2, CRC3, der abhängig vom Vorgänger-Glied gebildet ist. Somit umfasst das erste Glied 511 einen ersten Hashwert CRC1 von seinem Vorgänger-Glied, das zweite Glied 512 einen Hashwert CRC2 vom ersten Glied 511, und das dritte Glied 513 einen Hashwert CRC3 vom zweiten Glied 512. Der Hash-Wert kann insbesondere ein kryptographischer Hash-Wert sein, der z.B. mittels SHA2-256, SHA2-384, SHA-3, BLAKE2 bestimmbar ist.

Die Fig. 1 zeigt ein Ausführungsbeispiel eines Transaktionsdatensatzes.

Mit Hilfe des Transaktionsdatensatzes 410 kann eine Transaktion T ausgeführt werden. Die Glieder 513, 512, 511 können jeweils zu ihren Transaktionen T einen Hash(funktions)-Wert umfassen, der abhängig von den Transaktionsdatensätzen 410 gebildet wird. Üblicherweise wird ein Hash-Baum, z. B. ein Merkle Tree oder Patricia Tree, verwendet, dessen Wurzel-Hash-Wert in einem Block bzw. Glied hinterlegt wird.

Ein Block bzw. Glied kann weiterhin einen Zeitstempel, eine digitale Signatur, einen Proof-of-Work-Nachweis aufweisen. Unter "Proof-of-Work-Nachweis" kann in diesem Zusammenhang beispielsweise ein Lösen einer rechenintensiven Aufgabe verstanden werden, die insbesondere abhängig vom Glied-Inhalt/Inhalt eines Transaktionsdatensatzes zu lösen ist. Eine solche rechenintensive Aufgabe wird beispielsweise auch als kryptographisches Puzzle bezeichnet.

Dabei ist der Programmcode 460, z. B. ein Smart Contract. Der Transaktionsdatensatz 410 kann noch weitere Daten umfassen wie beispielsweise einen Betreff 420 (z. B. Siemens SiemensA-BC), einen öffentlichen Schlüssel 430 (z. B. 3A76E21876EFA03787FD629A65E9E990...), den verwendeten Algorithmus 440 des öffentlichen Schlüssels 430 (z. B. ECC) und eine Parameterangabe 450 zu dem Algorithmus (z. B. Curve: brainpoolP160r1).

Der Transaktionsdatensatz 410 beinhaltet eine Hash-Wert (z.B. SHA256) für den Smart Contract 460. Damit kann der Smart Contract nicht mehr nachträglich unbemerkt verändert werden.

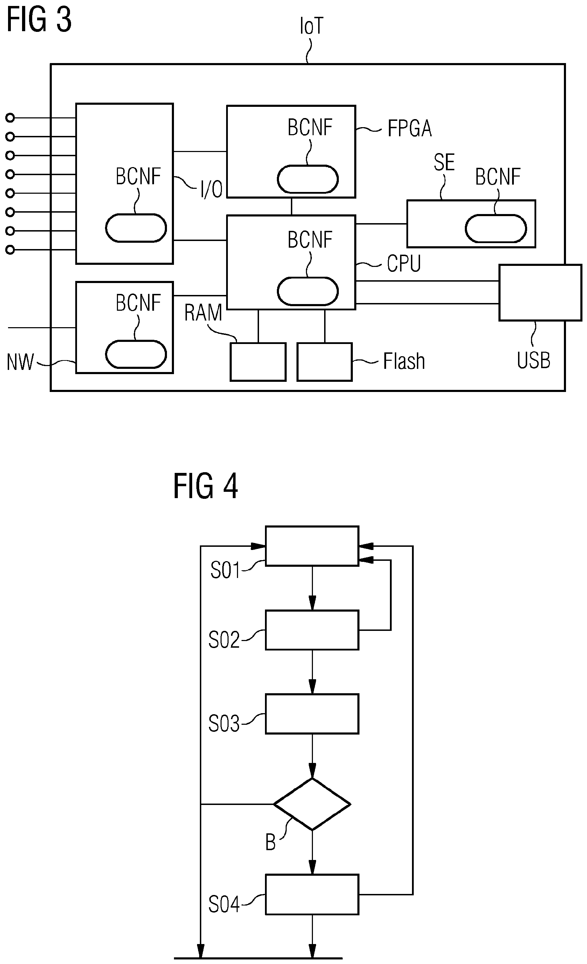

Fig. 3 zeigt eine Ausführungsform, wie eine Blockketten-Funktionalität in ein System bzw. in ein Gerät integriert sein kann.

Solche Geräte können beispielsweise Fahrzeuge, führerlose Transportsysteme, Roboter, Testgeräte oder andere Komponenten einer industriellen Anlage sein.

Figur 3 zeigt ein Gerät IoT, insbesondere ein Feldgerät, mit einer Recheneinheit CPU, einer programmierbare Digitalschaltung FPGA, CPLD, einem Secure Element SE und mehreren Ein-/Ausgabeschnittstellen I/O zur Verbindung von Sensoren und Aktoren, eine Netzwerkschnittstelle NW, und eine USB-Schnittstelle USB. Außerdem sind Speicherbaugruppen RAM und Flash vorhanden.

Das Secure-Element kann eine Steuerungsfunktion sicherheitsrelevante Maßnahmen aufweisen, wie z.B. ein Anhalten eines Fahrzeugs oder Roboters bevor eine Kollision eintritt. Es werden die Sicherheits- bzw. Schutzmaßnahmen für eine Steuerungsfunktion durch eine Watchdog sichergestellt. Damit können sicherheitskritische "Fehlfunktionen" gesichert und manipulationsgeschützt verhindert werden.

Die Komponenten des Feldgeräts enthalten erfindungsgemäß eine Blockchainknoten-Funktionalität BCNF. Das bedeutet, dass die Knoten, im Beispiel die Komponenten, gemeinsam eine (Geräte-)Blockchain 510 realisieren. Sie können Transaktionen T einstellen, Transaktionen überprüfen, und Glieder 513, 512, 511 bzw. Blöcke mit überprüften Transaktionen bilden.

Die Transaktionen T betreffen z.B. einen Geräteselbsttest bzw. Komponentenselbsttest einer Komponente des Geräts, einen Betriebsartwechsel (z.B. Wartung, Regelbetrieb, Fehlermodus, eingeschränkter Notbetriebsmodus), eine Geräte-Integritätsselbstprüfung, Security-Watchdog (z.B. Integritätsprüfung von Firmwaredaten, von Konfigurationsdaten, Überprüfung von laufenden Prozessen bzw. Tasks), Überwachung von Gerätesensoren (Temperatur, Spannungsversorgung, Gehäuseschalter, Tamper-Sensoren).

Ein Smart Contract der Blockchain analysiert Daten und kann eine Watchdog-Bestätigungstransaktion ausstellen (z.B. OK, Failure, Manipulation oder Fehlen einer erwarteten Transaktion). Das Gerät IoT selbst, ein weiteres Gerät (z.B. Safety-Steuerrechner) und/oder ein Leitstelle kann die Blockchain-Information, z.B. eine Bestätigungstransaktion bzw. Fehlertransaktion, auswerten (Alarm, Reboot, Nothalt, Deaktivieren von Ausgabeschnittstellen, Sperren von Netzwerkschnittstellen). Die Blockchain kann lokal innerhalb des Gerätes realisiert sein. Das Gerät IoT kann dabei ein Steuergerät, ein Feldgerät, ein IoT-Gerät sein. Ein Gerät kann auch eine Server-Funktionalität aufweisen, z.B. eine Edge Cloud Server-Funktionalität oder ein IoT-Gateway mit nachladbaren Apps. Auf solchen Geräten kann ein Hypervisor bzw. eine Container Runtime implementiert sein, um mehrere Executables (ausführbare Programme wie Apps, Container) auf diesen Geräten auszuführen.

Insbesondere kann die Blockchain auf mehreren Prozessoren bzw. Prozessorkernen oder auf mehreren virtuellen Maschinen/Containern eines Gerätes realisiert sein. Eine Blockchain wird im erfindungsgemäßen Kontext nicht dazu verwendet, um eine verteilte Transaktionsdatenbank gemäß des erwähnten Standes der Technik zu realisieren, sondern die Blockchain wird durch mehrere Komponenten innerhalb eines Gerätes realisiert. Die Blockchain zur Realisierung des Integrity-Watchdogs kann auf einem Gerät oder verteilt auf mehreren Geräte bzw. dessen Komponenten realisiert sein. Dadurch können mehrere Geräte die Integrität gegenseitig überwachen. Weiterhin kann eine Systemintegritätsinformation ermittelt und geprüft werden, bei der die Geräteintegritätsinformation von mehreren Geräten gemeinsam überprüft wird. Insbesondere ist es möglich, die Integritätsinformation von mehreren baugleichen Geräten auf Übereinstimmung zu überprüfen. Eine solche Realisierung ist z.B. für IoT-Geräte vorteilhaft.

Die Realisierung eines Geräteinternen Blockchain hat auch den Vorteil, dass auf dem Gerät Funktionen wie eine Selbsttestfunktion, eine Geräte-Integritätsselbstprüfung, ein Security-Watchdog, mit hoher Verlässlichkeit auf dem Gerät realisiert werden können. Da es nicht allein eine einzelne Komponente gibt, die das Gerät überwacht, wird eine Manipulation durch einen Angreifer erschwert. Die einzelnen Komponenten eines Gerätes können sich manipulationsgeschützt gegenseitig überwachen bzw. gemeinsam eine Geräteintegritätsüberwachung verteilt mit Hilfe der Blockketten-Funktionalität realisieren. Eine Geräte-interne Blockkette kann beim Gerätestart neu gebildet werden. D.h. bei einem gerätestart (Reboot) wird ein Genesis-Block bzw. -Glied als Start-Glied der Geräte-Blockkette gebildet. Der Genesis-Block wird auf den Komponenten des Gerätes, die die Geräte-Blockkette realisieren, gespeichert. In einer weiteren Ausführungsform wird der Genesis-Block der Geräte-Blockkette beim Einrichten oder Ändern einer Gerätekonfiguration eingerichtet. In einer weiteren Ausführungsform wird der Genesis-Block der Geräte-Blockkette beim Versiegeln einer Geräte-Konfiguration eingerichtet. Versiegeln bedeutet, dass eine Gerätekonfiguration nach Erfolgtem Versiegelungsvorgang nicht mehr modifiziert, sondern nur noch gelöscht werden kann. In einer weiteren Ausführungsform wird der Genesis-Block der Geräte-Blockkette bei her Herstellung des Gerätes gebildet und in das Gerät eingebracht. Der Genesis-Block der Geräte-Blockkette wird auf den Komponenten des Gerätes, die die Geräte-Blockkette realisieren, gespeichert. Vorzugsweise wird auf mehreren Exemplaren eines Gerätes jeweils ein Geräte-individueller Genesis-Block eingerichtet.

Weiterhin können nur eine bestimmte Anzahl von Gliedern der Geräte-internen Blockkette auf dem Gerät vorgehalten werden. D.h. es wird beim Bilden eines neuen Blocks der Blockkette der am weitesten zurückliegende Block gelöscht. Dies ist vorteilhaft, um den Speicherplatz der Blockkette zu begrenzen. Dies ist insbesondere bei Steuergeräten und IoT-Geräten mit begrenztem Speicherplatz sinnvoll. Dies kann auch so verstanden werden, dass der Genesis-Block dynamisch ist, d.h. dass ein z.B. 10000 Blöcke zurückliegendes Glied der Blockkette als Genesis-Block verwendet wird. Dabei ist es möglich, dass die mehreren Blockchain-Knoten des Gerätes jeweils den gleichen Block als dynamischen Genesis-Block verwenden. Dazu kann ein deterministisches Verfahren durch die mehreren Komponenten verwendet werden (z.B. 10000 Blöcke zurück), so dass die Komponente den gleichen Block als gemeinsamen dynamischen Genesis-Block ermittelt. In einer weiteren Ausführungsform kann durch die Blockchain-Knoten durch Blockchain-Transaktionen ein gemeinsamer dynamischer Genesis-Block bestimmt werden. Dazu kann z.B. jeder Knoten ein Votum mit einem Index abgeben, und der Block mit dem kleinsten Index (d.h. am der am weitesten zurückleigende Knoten) wird als neuer gemeinsamer dynamischer Genesis-Block verwendet. Es ist jedoch auch möglich, dass jeder Geräte-interne Blockchain-Knoten selbst einen Komponenten-spezifischen dynamischen Genesis-Block bestimmt.

Ein Gerät im Sinne der Erfindung kann eine Komponente bzw. ein Bauteil oder mehrere Komponenten sein, die sich in einem Gehäuse befindet/befinden. Ein Gerät kann jedoch auch mehrere Komponenten aufweisen. So kann es z.B. Erweiterungsmodule umfassen, die z.B. ansteckbar sind oder in dem Gerät eingesteckt werden können (z.B. IO-Module für eine Hauptbaugruppe). Auch kann das Gerät intern aus mehreren Baugruppen, z.B. Platinen, bestehen, die z.B. über einen Rückwandbus verbunden sind.

In einer weiteren Ausführungsform wird eine geräteübergreifende Blockchain realisiert. So kann ein Gerät, das eine Geräteblockchain realisiert, Transaktionsdatensätze weiterer Geräte überprüfen und bei positivem Überprüfungsergebnis in die Geräteblockchain aufnehmen. Dies hat den Vorteil, dass ein Gerät, das eine Geräteblockchain unterstützt, Transaktionsdaten von weiteren Geräten, die keine Geräteblockchain unterstützen, überprüfen und in seine Geräteblockchain aufnehmen kann.

In einer weiteren Ausführungsform enthält das Feldgerät mehrere Rechenkerne (physikalische Rechenkerne oder virtuelle Rechenkerne), die ein redundantes System realisieren. Dazu können z.B. zwei separate CPUs vorgesehen sein, es kann eine doppelte Berechnung erfolgen (z.B. mit regulär codierten und modifiziert codierten Daten), zwei CPU-Rechenkerne, zwei oder mehreren virtuellen Maschinen, zwei oder mehreren Containern. Um Fehler zu erkennen (z.B. transiente Fehler, HW-Defekt), erfolgt eine Blockchain-basierte Konsistenzprüfung (Blockchain-basierte Lock-Step-Architektur). Dazu werden die Ausgabedaten oder Bearbeitungs-Zwischenstände der zumindest zwei Rechenkerne zu vorgebbaren Zeitpunkten auf Konsistenz bzw. Übereinstimmung überprüft.

Dazu wird für jeden Rechenkern eine Transaktion erzeugt, die die Ausgabedaten bzw. Zwischendaten der jeweiligen Rechenkerne umfassen (direkt oder als Prüfsumme, z.B. CRC-Wert oder kryptographischer Hash-Wert). Durch die verteilte Blockchain-Realisierung werden die Transaktionsdatensätze der mehreren Rechenkerne auf Konsistenz/Übereinstimmung überprüft, z.B. durch einen Smart Contract (Programmcode) der Blockchain.

Falls keine Übereinstimmung vorliegt, so kann das Gerät angehalten werden oder dessen IO-Schnittstellen gesperrt werden. Dazu kann eine Komponente sich selbst deaktivieren, wenn ihre Blockchainknoten-Funktion einen Gerätefehler erkennt. Ebenso ist es möglich, dass eine Komponente, z.B. das Secure Element, ein Steuersignal bereitstellt, wenn sie einen Gerätefehler erkennt. Das Steuersignal kann z.B. die IO-Schnittstelle deaktivieren (z.B. die Schnittstellen hochohmig schalten, die Netzwerkschnittstelle sperren) oder die CPU oder den FPGA neustarten oder in einem Grundzustand (Reset) halten. Die Geräteblockchain realisiert hier also einen Gerätewatchdog. Durch die Blockchain-Logik kann dieser mit hoher Vertrauenswürdigkeit realisiert werden. Durch die Geräteblockchain bzw. den mittels der Geräteblockchain realisierten Safety-Watchdog erfolgt eine Überwachung auf Übereinstimmung bzw. Konsistenz. Ein redundantes, Safety-kritisches System kann damit auf herkömmlicher Hardware und manipulationsgeschützt realisiert werden.

Wie oben bereits angedeutet und in Figur 3 schematisch dargestellt sind folgende Ausprägungen der Erfindung möglich:
Die Integrität der Ausführung ist nicht nur gegenüber zufälligen Fehlern, sondern auch gegen gezielte Manipulation durch die Blockketten-basierte Ausführung geschützt.

Figur 4 zeigt beispielhaft ein Ablaufdiagramm des erfindungsgemäßen Verfahrens, bei dem die Schritte mit S01 bis S04 gekennzeichnet sind.

In Schritt S01 und S02 wird ein erstes und ein zweites Glied einer Blockkette gebildet bzw. bereitgestellt und miteinander verkettet. So ein Glied umfasst ein oder mehrere Transaktionsdatensätze beispielsweise der Art, wie es oben bereits erläutert wurde. Der Transaktionsdatensatz umfasst beispielsweise Programmcode, der zur Überwachung eines Betriebszustands eines Geräts z.B. ein IoT-Gerät bzw. seiner Komponenten oder von Komponenten einer Anlage, geeignet ist. Die angesprochene Überwachungsfunktion(alität), z.B. Integrity-Watchdog bzw. Manipulations-Watchdog, ist somit in den Transaktionsdatensatz integriert. In Schritt S03 wird eine kryptographische Überprüfungsfunktion bereitgestellt, die die durch einen Transaktionsdatensatz definierte Transaktion auf Integrität bzw. Zulässigkeit bzw. Gültigkeit überprüft.

Gemäß der Bedingung B, die abhängig vom Überprüfungsergebnis ist, wird das Verfahren bei negativem Überprüfungsergebnis (Unzulässigkeit bzw. Ungültigkeit der Transaktion) beendet oder mit Schritt S01 fortgeführt. D.h. es wird ein weiteres Glied mit einem Transaktionsdatensatz gebildet, der evtl. der Überprüfung als zulässig standhält. Wenn das genannte Überprüfungsergebnis (positiv) die Transaktion für zulässig oder gültig beurteilt, dann wird in S04 ein Transaktionsdatensatz gebildet, der ein zum Betriebszustand passende bzw. dem Betriebszustand zugeordnete oder vom Betriebszustand abgeleitete Maßnahme aufweist. Diese Maßnahme kann eine Fehlerkorrektur, ein Neustart, ein Nothalt/Notaus, ein Aktivieren eines Notfallbetriebsmodus oder auch nur ein Fehler- bzw. Warnhinweis sein. Die durch den Transaktionsdatensatz definierte Transaktion kann durch eine Komponente des Geräts oder der Anlage ausgeführt werden. Die Maßnahme kann durch dieselbe oder eine andere Komponente oder durch eine sich außerhalb des Geräts oder der Anlage befindlichen Stelle eingeleitet bzw. weitergegeben und/oder ausgeführt werden. Danach kann das Verfahren beendet oder danach mit Schritt S01 fortgeführt werden. Das Verfahren kann also wiederholt werden. Schritte S01 und S02 können zur Bildung einer Blockkette wiederholt werden, bis eine vorgebbare Anzahl an Blockkettengliedern erreicht ist oder keine Transkationen mehr ausgeführt werden müssen. Das Bilden des Transaktionsdatensatzes gemäß S04 kann je nach Maßnahme zu einer bereits oben erwähnte Bestätigungstransaktion bzw. Fehlertransaktion führen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. System zur kryptographisch geschützten Überwachung wenigstens einer Komponente eines Geräts oder einer Anlage aufweisend (BCNF) :
- Mittel zum Bereitstellen zumindest eines zweiten Gliedes (512, 511) einer Blockkette (510), welches mindestens einen Transaktionsdatensatz umfasst, der einen überwachten Betriebszustand mindestens einer Komponente (NW) des Geräts (I-oT) oder der Anlage umfasst,
- Mittel zum Verketten des zumindest einen zweiten Glieds mit einem ersten Glied (513) derselben oder einer weiteren Blocckette,
- Mittel zum Bereitstellen einer Überprüfungsfunktion, welche eine durch den mindestens einen Transaktionsdatensatz (410) definierte, auszuführende Transaktion (T) auf Integrität überprüft, und
- Mittel zum Bilden eines eine zum Betriebszustand zugeordnete Maßnahme aufweisenden Transaktionsdatensatzes abhängig vom von der Überprüfungsfunktion gelieferten Überprüfungsergebnis, das einen Wert für eine Bestätigung oder für einen Fehler und/oder für eine Manipulation oder für ein Fehlen eine erwarteten Transaktionsdatensatzes umfasst, wobei die durch den Transaktionsdatensatz definierte Transaktion durch eine Komponente (CPU) des Geräts oder der Anlage ausgeführt wird und die Maßnahme durch dieselbe oder eine andere Komponente (SE) oder durch eine sich außerhalb des Geräts (IoT) oder der Anlage befindlichen Stelle eingeleitet und/oder ausgeführt wird.

2. System nach dem vorhergehenden Anspruch, **dadurch gekennzeichnet, dass** das erste Glied (513) einen weiteren überwachten Betriebszustand mindestens einer weiteren Komponente (SE) des Geräts (IoT) oder der Anlage umfasst.

3. System nach einem der vorhergehenden Ansprüche, **dadurch gekennzeichnet, dass** das Überwachen der mindestens einen und/oder weiteren Komponente mittels eines sogenannten Smart Contract (460) implementiert ist.

4. System nach einem der vorhergehenden Ansprüche, **dadurch gekennzeichnet, dass** der Betriebszustand einen Geräte- oder Anlagen-internen Zustand betrifft.

5. System nach einem der vorhergehenden Ansprüche, **dadurch gekennzeichnet, dass** das der Betriebszustand einen Zustand von außerhalb des Geräts oder der Anlage angeordneten Sensoren, Aktoren und/oder Steuerungseinrichtungen für das Geräte oder die Anlage betrifft.

6. Verfahren zur kryptographisch geschützten Überwachung wenigstens einer Komponente eines Geräts oder einer Anlage aufweisend folgende Schritte (S01 bis S04):
- Bereitstellen (S01) zumindest eines zweiten Gliedes (512, 511)) einer Blockkette (510), welches mindestens einen Transaktionsdatensatz (410) umfasst, wobei im Transaktionsdatensatz ein überwachter Betriebszustand mindestens einer Komponente (NW) des Geräts (IoT) oder der Anlage repräsentiert wird,
- Verketten (S02) des zumindest einen zweiten Glieds mit einem ersten Glied (513) derselben oder einer weiteren Blocckette,
- Bereitstellen (S03) einer Überprüfungsfunktion, welche den Transaktionsdatensatz auf Integrität/Zulässigkeit überprüft, und
- Bilden (S04) eines eine zum Betriebszustand zugeordnete Maßnahme aufweisenden Transaktionsdatensatzes abhängig vom von der Überprüfungsfunktion gelieferten Überprüfungsergebnis (B), das einen Wert für eine Bestätigung oder für einen Fehler und/oder für eine Manipulation oder für ein Fehlen eine erwarteten Transaktionsdatensatzes umfasst, wobei die durch den Transaktionsdatensatz definierte Transaktion (T) durch eine Komponente (CPU) des Geräts oder der Anlage ausgeführt wird und die Maßnahme durch dieselbe oder eine andere Komponente (SE) oder durch eine sich außerhalb des Geräts (IoT) oder der Anlage befindlichen Stelle eingeleitet und/oder ausgeführt wird.

7. Verfahren nach dem vorhergehenden Anspruch, **dadurch gekennzeichnet, dass** das erste Glied einen weiteren überwachten Betriebszustand mindestens einer weiteren Komponente (SE) des Geräts (IoT) oder der Anlage umfasst.

8. Verfahren nach einem der vorhergehenden Verfahrensansprüche, **dadurch gekennzeichnet, dass** das Überwachen des Betriebszustands der mindestens einen und/oder weiteren Komponente mittels eines sogenannten Smart Contract (460) implementiert ist.

9. Verfahren nach einem der vorhergehenden Verfahrensansprüche, **dadurch gekennzeichnet, dass** der Betriebszustand einen Geräte- oder Anlagen-internen Zustand betrifft.

10. Verfahren nach einem der vorhergehenden Verfahrensansprüche, **dadurch gekennzeichnet, dass** das der Betriebszustand einen Zustand von außerhalb des Geräts oder der Anlage angeordneten Sensoren, Aktoren und/oder Steuerungseinrichtungen für das Geräte oder die Anlage betrifft.

11. Computerprogrammprodukt mit Programmbefehlen für das System nach einem der vorhergehenden Systemansprüche, das mittels der Programmbefehle konfiguriert wird, die zur kryptographisch geschützten Überwachung wenigstens einer Komponente eines Geräts oder einer Anlage nach einem der vorhergehenden Verfahrensansprüche geeignet sind und zumindest ein Glied (511, 512, 513) einer Blockkette (510) bilden, dessen Transaktionsdatensatz (410) einen überwachten Betriebszustand mindestens einer Komponente (SE, NW, FPGA, I/O, USB)) des Geräts (IoT) oder der Anlage umfasst.

## Claims

1. System for the cryptographically protected monitoring of at least one component of a device or an apparatus comprising (BCNF) :
- means for providing at least one second link (512, 511) of a blockchain (510), said at least one second link comprising at least one transaction data set comprising a monitored operating state of at least one component (NW) of the device (IoT) or the apparatus,
- means for linking the at least one second link to a first link (513) of the same or a further blockchain,
- means for providing a checking function which checks a transaction (T) to be carried out, which transaction is defined by the at least one transaction data set (410), for integrity, and
- means for forming a transaction data set having a measure assigned to the operating state, depending on the checking result yielded by the checking function, which checking result comprises a value for a confirmation or for an error and/or for a manipulation or for an absence of an expected transaction data set, wherein the transaction defined by the transaction data set is carried out by a component (CPU) of the device or of the apparatus and the measure is initiated and/or carried out by the same or a different component (SE) or by a station situated outside the device (IoT) or the apparatus.

2. System according to the preceding claim, **characterized in that** the first link (513) comprises a further monitored operating state of at least one further component (SE) of the device (IoT) or of the apparatus.

3. System according to either of the preceding claims, **characterized in that** the monitoring of the at least one and/or further component is implemented by means of a so-called smart contract (460).

4. System according to any of the preceding claims, **characterized in that** the operating state relates to a device- or apparatus-internal state.

5. System according to any of the preceding claims, **characterized in that** the operating state relates to a state of sensors, actuators and/or control units for the device or the apparatus which are arranged outside the device or the apparatus.

6. Method for the cryptographically protected monitoring of at least one component of a device or an apparatus comprising the following steps (S01 to S04):
- providing (S01) at least one second link (512, 511) of a blockchain (510), said at least one second link comprising at least one transaction data set (410), wherein a monitored operating state of at least one component (NW) of the device (IoT) or of the apparatus is represented in the transaction data set,
- linking (S02) the at least one second link to a first link (513) of the same or a further blockchain,
- providing (S03) a checking function which checks the transaction data set for integrity/admissibility, and
- forming (S04) a transaction data set having a measure assigned to the operating state, depending on the checking result (B) yielded by the checking function, which checking result comprises a value for a confirmation or for an error and/or for a manipulation or for an absence of an expected transaction data set, wherein the transaction (T) defined by the transaction data set is carried out by a component (CPU) of the device or of the apparatus and the measure is initiated and/or carried out by the same or a different component (SE) or by a station situated outside the device (IoT) or the apparatus.

7. Method according to the preceding claim, **characterized in that** the first link comprises a further monitored operating state of at least one further component (SE) of the device (IoT) or of the apparatus.

8. Method according to either of the preceding method claims, **characterized in that** the monitoring of the operating state of the at least one and/or further component is implemented by means of a so-called smart contract (460).

9. Method according to any of the preceding method claims, **characterized in that** the operating state relates to a device- or apparatus-internal state.

10. Method according to any of the preceding method claims, **characterized in that** the operating state relates to a state of sensors, actuators and/or control units for the device or the apparatus which are arranged outside the device or the apparatus.

11. Computer program product having program instructions for the system according to any of the preceding system claims, which is configured by means of the program instructions which are suitable for the cryptographically protected monitoring of at least one component of a device or an apparatus according to any of the preceding method claims and form at least one link (511, 512, 513) of a blockchain (510), the transaction data set (410) of said at least one link comprising a monitored operating state of at least one component (SE, NW, FPGA, I/O, USB) of the device (IoT) or of the apparatus.

## Revendications

1. Système de surveillance protégée cryptographiquement d'au moins un composant d'un appareil ou d'une installation, comportant (BCNF) :
- des moyens pour fournir au moins un deuxième maillon (512, 511) d'une chaîne de blocs (510), lequel comprend au moins un jeu de données de transaction qui comprend un état de fonctionnement surveillé d'au moins un composant (NW) de l'appareil (IoT) ou de l'installation,
- des moyens pour enchaîner l'au moins un deuxième maillon à un premier maillon (513) de la même ou d'une autre chaîne de blocs,
- des moyens pour fournir une fonction de vérification, laquelle vérifie une transaction (T) à exécuter définie par l'au moins un jeu de données de transaction (410) quant à son intégrité et
- des moyens pour former un jeu de données de transaction comportant une mesure associée à l'état de fonctionnement en fonction du résultat de vérification fourni par la fonction de vérification, lequel comprend une valeur pour une confirmation ou pour une erreur et/ou pour une manipulation ou pour une absence d'un jeu de données de transaction attendu, la transaction définie par le jeu de données de transaction étant exécutée par un composant (CPU) de l'appareil ou de l'installation et la mesure étant prise et/ou exécutée par le même ou par un autre composant (SE) ou par un poste situé en dehors de l'appareil (IoT) ou de l'installation.

2. Système selon la revendication précédente, **caractérisé en ce que** le premier maillon (513) comprend un autre état de fonctionnement surveillé d'au moins un autre composant (SE) de l'appareil (IoT) ou de l'installation.

3. Système selon l'une des revendications précédentes, **caractérisé en ce que** la surveillance de l'au moins un et/ou autre composant est implémentée au moyen de ce qu'il est convenu d'appeler un Smart Contract (460).

4. Système selon l'une des revendications précédentes, **caractérisé en ce que** l'état de fonctionnement concerne un état interne de l'appareil ou de l'installation.

5. Système selon l'une des revendications précédentes, **caractérisé en ce que** l'état de fonctionnement concerne un état de capteurs, d'actionneurs et/ou de dispositifs de commande pour l'appareil ou l'installation, agencés en dehors de l'appareil ou de l'installation.

6. Procédé de surveillance protégée cryptographiquement d'au moins un composant d'un appareil ou d'une installation, comportant les étapes suivantes (S01 à S04) :
- fourniture (S0l) d'au moins un deuxième maillon (512, 511) d'une chaîne de blocs (510), lequel comprend au moins un jeu de données de transaction (410), dans le jeu de données de transaction étant représenté un état de fonctionnement surveillé d'au moins un composant (NW) de l'appareil (IoT) ou de l'installation ;
- enchaînement (S02) de l'au moins un deuxième maillon à un premier maillon (513) de la même ou d'une autre chaîne de blocs ;
- fourniture (S03) d'une fonction de vérification qui vérifie le jeu de données de transaction quant à son intégrité/admissibilité
et
- formation (S04) d'un jeu de données de transaction comportant une mesure associée à l'état de fonctionnement en fonction du résultat de vérification (B) fourni par la fonction de vérification, lequel comprend une valeur pour une confirmation ou pour une erreur et/ou pour une manipulation ou pour une absence d'un jeu de données de transaction attendu, la transaction (T) définie par le jeu de données de transaction étant exécutée par un composant (CPU) de l'appareil ou de l'installation et la mesure étant prise et/ou exécutée par le même ou par un autre composant (SE) ou par un poste situé en dehors de l'appareil (IoT) ou de l'installation.

7. Procédé selon la revendication précédente, **caractérisé en ce que** le premier maillon comprend un autre état de fonctionnement surveillé d'au moins un autre composant (SE) de l'appareil (IoT) ou de l'installation.

8. Procédé selon l'une des revendications de procédé précédentes, **caractérisé en ce que** la surveillance de l'état de fonctionnement de l'au moins un et/ou autre composant est implémentée au moyen de ce qu'il est convenu d'appeler un Smart Contract (460).

9. Procédé selon l'une des revendications de procédé précédentes, **caractérisé en ce que** l'état de fonctionnement concerne un état interne de l'appareil ou de l'installation.

10. Procédé selon l'une des revendications de procédé précédentes, **caractérisé en ce que** l'état de fonctionnement concerne un état de capteurs, d'actionneurs et/ou de dispositifs de commande pour l'appareil ou l'installation, agencés en dehors de l'appareil ou de l'installation.

11. Produit de programme informatique comportant des commandes de programme pour le système selon l'une des revendications de système précédentes, lequel est configuré au moyen des commandes de programme qui sont adaptées pour la surveillance protégée cryptographiquement d'au moins un composant d'un appareil ou d'une installation selon l'une des revendications de procédé précédentes et forment au moins un maillon (511, 512, 513) d'une chaîne de blocs (510) dont le jeu de données de transaction (410) comprend un état de fonctionnement surveillé d'au moins un composant (SE, NW, FPGA, I/0, USB) de l'appareil (IoT) ou de l'installation.
